# FASCICULE DE BREVET EUROPEEN

(11) **EP 3 333 620 B1**
(45) Date de publication et mention de la délivrance du brevet: **30.01.2019**
(21) Numéro de dépôt: 16202831.0
(22) Date de dépôt: 08.12.2016
(51) Int. Cl.: G02F 1/1333, G02F 1/1345, G06F 3/041

(54) **DISPOSITIF D'AFFICHAGE MUNI DE TOUCHES TACTILES**
ANZEIGEVORRICHTUNG MIT BERÜHRUNGSEMPFINDLICHEN TASTEN
DISPLAY DEVICE PROVIDED WITH TOUCH KEYS

(43) Date de publication de la demande: 13.06.2018
(73) Titulaire: EM Microelectronic-Marin SA, 2074 Marin (CH)
(72) Inventeur: Hamm, Alain, 2523 Lignières (CH); Longa, Giovanni, 2074 Marin (CH)
(74) Mandataire: Supper, Marc

(56) Documents cités:
- WO-A1-2013/042646
- JP-A- 2002 169 143
- JP-A- 2006 267 762
- US-A1- 2015 049 257

## Description

### Domaine technique de l'invention

La présente invention concerne un dispositif d'affichage muni de touches tactiles. La présente invention concerne tout particulièrement un dispositif d'affichage du type à cristal liquide comprenant de telles touches tactiles.

### Arrière-plan technologique de l'invention

Dans son acception la plus simple, une cellule d'affichage à cristal liquide comprend un substrat avant orienté du côté de l'observateur et un substrat arrière qui s'étend parallèlement à et à distance du substrat avant. Les substrats avant et arrière sont réunis entre eux au moyen d'un cadre de scellement qui délimite une enceinte étanche pour le confinement d'un cristal liquide. Une surface inférieure du substrat avant porte au moins une électrode et une surface supérieure du substrat arrière porte au moins une contre-électrode correspondante. Par application d'une tension électrique appropriée entre l'électrode et la contre-électrode, il est possible de modifier les propriétés optiques du cristal liquide au point de croisement des électrodes considérées.

Il est déjà connu d'associer à un dispositif d'affichage à cristal liquide du type brièvement décrit ci-dessus un dispositif d'introduction de données de commande du type à touches tactiles. Un tel dispositif d'introduction de données comprend typiquement un film souple ou rigide sur une surface inférieure duquel sont structurées des touches de commande tactiles qui sont réalisées au moyen d'un matériau conducteur tel que de l'oxyde d'étain- indium, également connu sous sa dénomination anglo-saxonne Indium-Tin Oxyde ou ITO. Chacune de ces touches tactiles forme une armature d'un condensateur dont l'autre armature est formée par la portion d'une surface supérieure du film souple ou rigide qui fait face à la touche tactile. Par apposition d'un doigt sur l'une de ces touches tactiles, l'utilisateur modifie la valeur de la capacité détectée par cette touche tactile, ce qui provoque l'introduction d'un signal de commande dans un microcontrôleur auquel les touches tactiles du dispositif d'introduction de données sont classiquement reliées au moyen d'un câble de connexion souple. Une fois fabriqué, le dispositif d'introduction de données à touches tactiles est classiquement solidarisé par laminage sur la surface supérieure du substrat avant du dispositif d'affichage à cristal liquide.

L'un des intérêts du montage ci-dessus est qu'il permet de proposer un ensemble d'affichage et de commande monobloc que l'on peut aisément intégrer par exemple dans le volume de la boîte d'un objet portable tel qu'une montre-bracelet. Toutefois, les coûts de fabrication d'un tel ensemble d'affichage et de commande sont relativement élevés. Il faut en effet fabriquer séparément le dispositif d'affichage à cristal liquide et le dispositif de commande à touches tactiles, puis assembler ces deux éléments.

Par ailleurs, à lui seul, le dispositif de commande à touches tactiles qui requiert d'une part un film souple ou rigide sur lequel sont structurées les touches de commande tactiles, et d'autre part un câble de connexion souple, est onéreux.

Enfin, le raccordement électrique d'un tel ensemble d'affichage et de commande monobloc doit se faire en deux étapes distinctes qui consistent pour l'une à relier la cellule d'affichage à cristal liquide à un dispositif extérieur de commande, et pour l'autre à relier le dispositif de commande à touches tactiles au même dispositif extérieur de commande ou à un second dispositif extérieur de commande distinct du premier. Ces opérations de connexion électriques sont fortes consommatrices de temps.

La demande de brevet américain publiée sous le numéro US 2015/0049257 divulgue un dispositif d'affichage à touches comprenant un panneau d'affichage, un dispositif tactile en couche, une première feuille de circuit imprimé flexible et une seconde feuille de circuit imprimé flexible. Le panneau d'affichage comprend un substrat coloré qui fait office de filtre, un substrat qui forme un réseau actif d'affichage, et une couche formée par un agent d'affichage. Le substrat qui forme le réseau actif d'affichage est disposé au-dessus du filtre coloré. L'agent d'affichage est disposé entre le filtre coloré et le réseau actif d'affichage. Le dispositif tactile en couche est agencé sur une surface extérieure du substrat qui forme le réseau actif d'affichage. La première feuille de circuit imprimé flexible est disposée sur une surface extérieure et un rebord du substrat qui forme le réseau actif d'affichage, et est reliée électriquement à la couche qui constitue le dispositif tactile. La seconde feuille de circuit imprimé flexible est disposée sur une surface intérieure opposée à la surface extérieure et sur un rebord du substrat qui forme le réseau actif d'affichage. Cette demande de brevet américain est silencieuse en ce qui concerne la connexion électrique de la couche formant le dispositif tactile avec un dispositif extérieur de commande.

Les demandes de brevet japonais JP 2006-267762 et JP 2002-169143 divulguent l'utilisation de broches de connexion pour relier électriquement les électrodes d'une cellule à cristal liquide à un circuit extérieur de commande. Par conséquent, utiliser de telles broches, non pas pour connecter les électrodes d'une cellule à cristal liquide, mais pour connecter électriquement des touches tactiles, constitue une simple alternative n'impliquant pas d'activité inventive.

La demande internationale WO 2013/042646 divulgue quant à elle un dispositif d'affichage d'images qui comprend un panneau tactile dans lequel un premier réseau de connexion et un second réseau de connexion sont agencés de façon qu'un circuit de commande ne se trouve pas imbriqué dans ce second réseau de connexion. Le câblage de signal est relié électriquement au premier réseau de connexion et à un dispositif externe dans le même connecteur souple que le câblage relié électriquement au second réseau de connexion et au panneau tactile.

### Résumé de l'invention

La présente invention a pour but de pallier les inconvénients mentionnés ci-dessus ainsi que d'autres encore en procurant un dispositif d'affichage à cristal liquide muni de touches tactiles dont le prix de revient soit sensiblement abaissé.

A cet effet, la présente invention concerne un dispositif d'affichage à cristal liquide comprenant un substrat avant et un substrat arrière qui s'étend parallèlement à et à distance du substrat avant, les substrats avant et arrière étant réunis entre eux au moyen d'un cadre de scellement qui délimite une enceinte étanche pour le confinement d'un cristal liquide, au moins une première électrode étant structurée sur une face inférieure du substrat avant, et au moins une deuxième électrode opposée étant structurée sur une face supérieure du substrat arrière, les propriétés optiques du cristal liquide étant modifiées par application d'une tension électrique appropriée au point de croisement de la première et de la deuxième électrodes considérées, la au moins une première électrode et la au moins une deuxième électrode étant réalisées en un matériau transparent électriquement conducteur et étant prolongées vers l'extérieur du dispositif d'affichage à cristal liquide par une première, respectivement une deuxième pistes électriquement conductrices structurées sur la face inférieure du substrat avant, au moins une troisième électrode définissant une zone tactile capacitive étant structurée sur une face supérieure du substrat avant, cette troisième électrode étant réalisée en un matériau transparent électriquement conducteur et étant prolongée par une troisième piste électriquement conductrice avec laquelle une broche de connexion est en contact électrique pour relier la troisième électrode avec un dispositif extérieur de commande, au moins une couche de protection ou un polariseur étant fixé sur la face supérieure du substrat avant et recouvrant la troisième électrode, le dispositif d'affichage à cristal liquide comprenant des première et deuxième broches de connexion en contact électrique avec la première, respectivement la deuxième piste électriquement conductrice, et qui permettent de relier la première et la deuxième électrode au même dispositif extérieur de commande que la troisième électrode ou à un dispositif extérieur de commande distinct.

Grâce à ces caractéristiques, la présente invention procure un dispositif d'affichage à cristal liquide muni de touches tactiles capacitives qui peut être fabriqué en un nombre réduit d'étapes et dont le prix de revient est donc très avantageux.

En effet, les premières électrodes qui, en coopération avec les deuxièmes électrodes, permettent de modifier les propriétés optiques du cristal liquide du dispositif d'affichage, et les troisièmes électrodes qui définissent les touches tactiles sont toutes structurées sur le substrat avant, respectivement sur la face inférieure et sur la face supérieure de ce dernier. Par conséquent, l'ensemble de ces électrodes peut être réalisé en utilisant les mêmes techniques de fabrication telles que la photolithographie, et en utilisant de préférence le même matériau électriquement conducteur. On comprend qu'une telle rationalisation des opérations de production du dispositif d'affichage à cristal liquide selon l'invention permet de gagner du temps et de réaliser des économies d'échelle qui ont un impact positif sur le prix de revient final de ce dispositif d'affichage. En particulier, il n'est pas nécessaire de fabriquer séparément un dispositif d'introduction de données de commande à touches tactiles, ce qui permet de faire l'économie du film souple ou rigide sur lequel étaient structurées les électrodes et du câble de connexion souple associé.

Par ailleurs, grâce à la présence des broches de connexion, le dispositif d'affichage à cristal liquide selon l'invention peut être très facilement relié à un dispositif extérieur de commande en enfonçant simplement les broches dans des trous correspondants ménagés dans une carte à circuits imprimés, également connue sous sa dénomination anglo-saxonne Printed Circuit Board ou PCB.

### Brève description des figures

D'autres caractéristiques et avantages de la présente invention ressortiront plus clairement de la description détaillée qui suit d'un exemple de réalisation d'un dispositif d'affichage à cristal liquide selon l'invention, cet exemple étant donné à titre purement illustratif et non limitatif seulement en liaison avec le dessin annexé sur lequel :

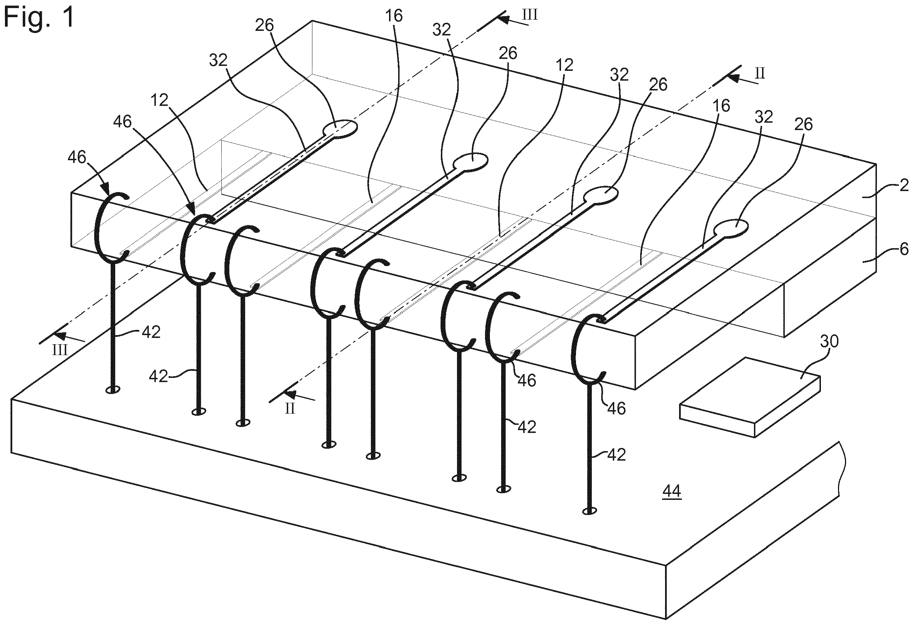

- la figure 1 est une vue de dessus en perspective d'un dispositif d'affichage à cristal liquide muni de touches tactiles selon l'invention ;

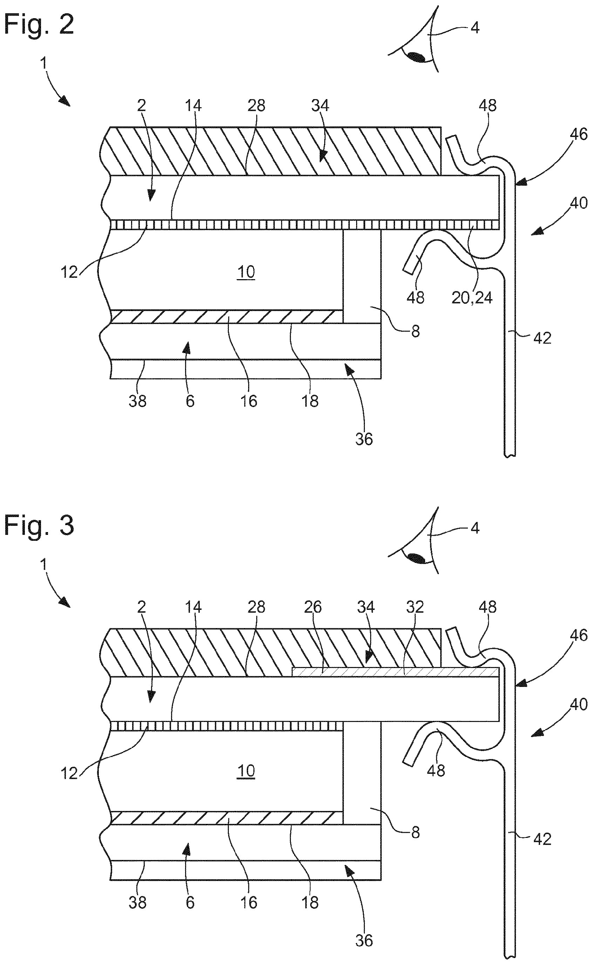

- la figure 2 est une vue en coupe selon la ligne II-II de la figure 1 qui illustre la connexion électrique entre une broche de connexion et une première piste électriquement conductrice pour relier une première électrode structurée sur une face inférieure du substrat avant avec un dispositif extérieur de commande, et
- la figure 3 est une vue en coupe selon la ligne III-III de la figure 1 qui illustre la connexion électrique entre une broche de connexion et une troisième piste électriquement conductrice pour relier une troisième électrode structurée sur une face supérieure du substrat avant avec le dispositif extérieur de commande.

### Description détaillée d'un mode de réalisation de l'invention

La présente invention procède de l'idée générale inventive qui consiste à structurer sur un même substrat transparent d'un côté une ou plusieurs électrodes nécessaires pour commander les propriétés optiques d'un cristal liquide, et de l'autre côté une ou plusieurs électrodes qui forment autant de touches tactiles capacitives permettant à un utilisateur d'introduire des commandes dans un dispositif de commande extérieur au dispositif d'affichage à cristal liquide selon l'invention. Grâce à ces caractéristiques, la présente invention permet de réaliser un dispositif capable à la fois d'afficher des informations et de prendre en compte des instructions d'un utilisateur en un nombre limité d'étapes de fabrication, à l'aide d'un même matériau et sur un même élément. Les économies en termes de coûts de fabrication et de composants nécessaires à la fabrication sont sensibles. D'autre part, il suffit d'enfoncer les broches de connexion dans des trous correspondants pratiqués dans une carte à circuits imprimés pour pouvoir relier le dispositif d'affichage à cristal liquide selon l'invention à un dispositif extérieur de commande. Les opérations de raccordement électrique du dispositif d'affichage à cristal liquide selon l'invention sont donc réduites au maximum, ce qui permet également de réaliser des économies sur le temps de fabrication.

L'invention sera décrite pour partie en liaison avec les figures 1 et 2 annexées à la présente demande de brevet. Comme il ressort de l'examen de ces deux figures, le dispositif d'affichage à cristal liquide selon l'invention, désigné dans son ensemble par la référence numérique générale 1, comprend un substrat avant 2 situé du côté d'un observateur 4, et un substrat arrière 6, disposé parallèlement à et à distance du substrat avant 2. Le substrat avant 2 et le substrat arrière 6 sont réunis entre eux au moyen d'un cadre de scellement 8 qui délimite une enceinte étanche 10 pour le confinement d'un cristal liquide. Une pluralité de premières électrodes 12 est structurée sur une face inférieure 14 du substrat avant 2, et une pluralité de deuxièmes électrodes 16 est structurée sur une face supérieure 18 du substrat arrière 6. Ces premières et deuxièmes électrodes 12 et 16 sont réalisées en un matériau transparent conducteur de l'électricité, par exemple de l'oxyde d'étain-indium, grâce à des techniques de gravure telles que la photolithographie, et permettent de contrôler les propriétés optiques du cristal liquide contenu dans l'enceinte étanche 10.

Les premières électrodes 12 sont prolongées vers l'extérieur du dispositif d'affichage à cristal liquide 1 par des premières pistes conductrices 20 qui sont structurées sur la face inférieure 14 du substrat avant 2. Les deuxièmes électrodes 16 qui sont structurées sur la face supérieure 18 du substrat arrière 6 sont renvoyées vers la face inférieure 14 du substrat avant 2 et sont prolongées vers l'extérieur du dispositif d'affichage à cristal liquide 1 par des deuxièmes pistes conductrices 24. De préférence, ces premières et deuxièmes pistes conductrices 20, 24 sont réalisées au moyen du même matériau et des mêmes techniques de gravure que les premières et deuxièmes électrodes 12, 16. Ces premières et deuxièmes pistes conductrices 20, 24 s'étendent à proximité du bord ou jusqu'au bord du substrat avant 2.

Une pluralité de troisièmes électrodes 26 qui définissent des zones tactiles capacitives sont structurées sur une face supérieure 28 du substrat avant 2. Ces troisièmes électrodes 26 sont réalisées en un matériau transparent électriquement conducteur qui est, de préférence, le même que celui utilisé pour réaliser les premières et deuxièmes électrodes 12, 16. De préférence, ces troisièmes électrodes 26 sont réalisées par les mêmes techniques de fabrication que celles utilisées pour les premières et deuxièmes électrodes 12, 16. Ces troisièmes électrodes 26 définissent des zones de contact dont la capacité change lorsque l'utilisateur pose un doigt dessus, ce qui permet d'envoyer un signal de commande à un dispositif extérieur de commande 30. Ces troisièmes électrodes 26 sont prolongées vers le bord du substrat avant 2 par des troisièmes pistes conductrices 32 qui sont structurées en même temps que les troisièmes électrodes 26.

A titre d'exemple purement illustratif et nullement limitatif, le cristal liquide utilisé dans le dispositif d'affichage à cristal liquide 1 selon l'invention est du type nématique en hélice, également bien connu sous sa dénomination anglo-saxonne Twisted Nematic liquid crystal ou cristal liquide TN. Ceci implique que le dispositif d'affichage à cristal liquide 1 soit muni d'un polariseur avant 34 solidarisé sur la face supérieure 28 du substrat avant 2 et recouvrant les troisièmes électrodes 26, ainsi que d'au moins un polariseur arrière 36 solidarisé sur une face inférieure 38 du substrat arrière 6. Selon qu'un contraste d'affichage positif ou négatif est recherché, les directions de polarisation du polariseur avant 34 et du polariseur arrière 36 sont croisées ou parallèles l'une par rapport à l'autre. A titre de variante, il est possible de remplacer le polariseur arrière 36 par un réflecteur, c'est-à-dire un polariseur muni d'une couche réfléchissante sur sa face arrière, ou bien par un transflecteur, c'est-à-dire un polariseur associé à une couche réflective semi-transparente.

Un examen de la figure 2 révèle qu'une première (ou une deuxième) piste conductrice 20 ou 24, structurée sur la face inférieure 14 du substrat avant 2, affleure le bord inférieur de ce substrat avant 2. Grâce à l'utilisation d'une broche de connexion 40, il est possible de relier électriquement la première (ou la deuxième) électrode 12 ou 16 correspondante à un dispositif extérieur de commande 30. Cette broche de connexion 40 se compose d'une tige 42 dont l'extrémité libre est destinée à être enfoncée dans un trou ménagé dans une carte à circuits imprimés 44, et d'une tête 46 comprenant deux bras 48 qui enserrent le bord du substrat avant 2 et qui établissent le contact électrique avec la première (ou la deuxième) piste conductrice 20 ou 24. De préférence, le maintien des broches de connexion 40 est assuré grâce à l'élasticité des bras 48 et peut être renforcé par dépôt d'une couche d'adhésif.

De même, un examen de la figure 3 révèle qu'une troisième piste conductrice 32, structurée sur la face supérieure 28 du substrat avant 2, affleure le bord supérieur de ce substrat avant 2. Grâce à l'utilisation d'une broche de connexion 40, il est possible de relier électriquement la troisième électrode 26 à laquelle la troisième piste conductrice 32 est reliée au dispositif extérieur de commande 30. La tige 42 de cette broche de connexion 40 est destinée à être enfoncée par son extrémité libre dans un trou ménagé dans la carte à circuits imprimés 44, et ses deux bras 48 enserrent le bord du substrat avant 2 et établissent le contact électrique avec la troisième piste conductrice 32.

Il va de soi que la présente invention n'est pas limitée au mode de réalisation qui vient d'être décrit et que diverses modifications et variantes simples peuvent être envisagées par l'homme du métier sans sortir du cadre de l'invention tel que défini par les revendications annexées. En particulier, la présente invention a été décrite en liaison avec un dispositif d'affichage à cristal liquide 1 comprenant plusieurs premières, deuxièmes et troisièmes électrodes 12, 16 et 26. Il va cependant de soi que dans son acception la plus simple, le dispositif d'affichage à cristal liquide 1 peut ne comprendre qu'une première et une deuxième électrode 12, 16 pour modifier, par application d'une tension électrique au point de croisement de ces deux électrodes 12 et 26, les propriétés optiques du cristal liquide, et une seule troisième électrode 26 pour définir une unique zone de contact.

De même, la présente invention a été décrite en liaison avec un dispositif d'affichage à cristal liquide 1 comprenant un cristal liquide du type nématique en hélice, également bien connu sous sa dénomination anglo-saxonne Twisted Nematic liquid crystal ou cristal liquide TN. Il va cependant de soi que d'autres cristaux liquides tels que super-nématique en hélice (Super Twisted Nematic ou STN) ou du type hôte-invité (guest-host liquid crystal) peuvent être envisagés. Dans le cas d'un cristal liquide du type guest-host, on peut s'affranchir de tout polariseur.

De même, dans la description ci-dessus, il a été envisagé le cas où les premières et les deuxièmes électrodes 12, 16 qui permettent de modifier les propriétés optiques du cristal liquide, et les troisièmes électrodes 26 qui permettent à l'utilisateur d'introduire des données sont toutes reliées à un même dispositif extérieur de commande 30. Il est cependant toutefois possible d'envisager que les électrodes permettant de contrôler le cristal liquide d'une part, et les électrodes tactiles capacitives d'autre part soient reliées à deux dispositifs extérieurs de commande distincts.

Il est également envisageable, hors du cadre de l'invention, que seules les troisièmes électrodes 26 qui permettent à l'utilisateur d'introduire des données dans le dispositif extérieur de commande 30 soient connectées au moyen de broches de connexion 40, tandis que les premières et secondes électrodes 12, 16 qui permettent de contrôler les propriétés optiques du cristal liquide peuvent être reliées avec l'environnement extérieur par exemple au moyen d'un connecteur de type Zebra® formé d'une succession de feuilles isolantes par exemple en élastomère et de feuilles conductrices de l'électricité par exemple en cuivre.

### Nomenclature

1. Dispositif d'affichage à cristal liquide
2. Substrat avant
4. Observateur
6. Substrat arrière
8. Cadre de scellement
10. Enceinte étanche
12. Premières électrodes
14. Face inférieure
16. Deuxièmes électrodes
18. Face supérieure
20. Premières pistes conductrices
24. Deuxièmes pistes conductrices
26. Troisièmes électrodes
28. Face supérieure
30. Dispositif extérieur de commande
32. Troisièmes pistes conductrices
34. Polariseur avant
36. Polariseur arrière
38. Face inférieure
40. Broche de connexion
42. Tige
44. Carte à circuits imprimés
46. Tête
48. Bras

## Revendications

1. Dispositif d'affichage à cristal liquide comprenant un substrat avant (2) et un substrat arrière (6) qui s'étend parallèlement à et à distance du substrat avant (2), les substrats avant (2) et arrière (6) étant réunis entre eux au moyen d'un cadre de scellement (8) qui délimite une enceinte étanche (10) pour le confinement d'un cristal liquide, le dispositif d'affichage à cristal liquide comprenant au moins une première électrode (12) structurée sur une face inférieure (14) du substrat avant (2), et au moins une deuxième électrode (16), les propriétés optiques du cristal liquide étant modifiées par application d'une tension électrique appropriée au point de croisement de la première et de la deuxième électrodes (12, 16) considérées, la au moins une première électrode (12) et la au moins une deuxième électrode (16) étant réalisées en un matériau transparent électriquement conducteur et étant prolongées vers l'extérieur du dispositif d'affichage à cristal liquide (1) par une première, respectivement une deuxième pistes électriquement conductrices (20, 24) structurées sur la face inférieure (14) du substrat avant (2) et qui s'étendent à proximité d'un bord du substrat avant (2) ou jusqu'à ce bord, au moins une troisième électrode (26) définissant une zone tactile capacitive étant structurée sur une face supérieure (28) du substrat avant (2), cette troisième électrode (26) étant réalisée en un matériau transparent électriquement conducteur et étant prolongée par une troisième piste électriquement conductrice (32) qui s'étend à proximité ou jusqu'au bord du substrat avant (2) et qui permet de relier la troisième électrode (26) avec un dispositif extérieur de commande (30), au moins une couche de protection ou un polariseur (34) étant fixé sur la face supérieure (28) du substrat avant (2) et recouvrant la troisième électrode (26), **caractérisé en ce que** le dispositif d'affichage à cristal liquide comprend des broches de connexion (40) agencées sur le bord du substrat avant (2), l'une de ces broches de connexion (40) étant en contact électrique avec la troisième piste électriquement conductrice (32) pour relier cette dernière au dispositif extérieur de commande (30), d'autres broches de connexion (40) étant en contact électrique avec la première, respectivement la deuxième piste électriquement conductrice (20, 24), permettant de relier la première et la deuxième électrode (12, 16) au dispositif extérieur de commande (30) ou à un dispositif extérieur de commande distinct, le dispositif d'affichage à cristal liquide étant également **caractérisé en ce que** la deuxième électrode (16) est structurée sur une face supérieure (18) du substrat arrière (6) et opposée à la première électrode (12).

## Patentansprüche

1. Flüssigkristallanzeigevorrichtung, umfassend ein vorderes Substrat (2) und ein hinteres Substrat (6), das sich parallel zu dem vorderen Substrat (2) und in einem Abstand hiervon erstreckt, wobei das vordere Substrat (2) und das hintere Substrat (6) miteinander verbunden sind mittels eines Einbaurahmens (8), der einen dichten Raum (10) für den Einschluss eines Flüssigkristalls begrenzt, wobei die Flüssigkristallanzeigevorrichtung mindestens eine erste Elektrode (12), die auf einer unteren Fläche (14) des vorderen Substrats (2) strukturiert ist, und mindestens eine zweite Elektrode (16) umfasst, wobei die optischen Eigenschaften des Flüssigkristalls durch Anlegen einer geeigneten elektrischen Spannung an den Kreuzungspunkt der betrachteten ersten und zweiten Elektrode (12, 16) modifiziert wird, wobei die mindestens eine erste Elektrode (12) und die mindestens eine zweite Elektrode (16) aus einem elektrisch leitenden, transparenten Material hergestellt sind und in die äußere Umgebung der Flüssigkristallvorrichtung (1) verlängert sind durch eine erste bzw. eine zweite elektrisch leitende Bahn (20, 24), die auf der unteren Fläche (14) des vorderen Substrats (2) strukturiert sind und sich in die Nähe eines Randes des vorderen Substrats (2) oder bis zu diesem Rand erstrecken, wobei mindestens eine dritte Elektrode (26), die eine kapazitive Berührungszone definiert, auf der oberen Fläche (28) des vorderen Substrats (2) strukturiert ist, wobei diese dritte Elektrode (26) aus einem elektrisch leitenden, transparenten Material hergestellt ist und verlängert ist durch eine dritte elektrisch leitende Bahn (32), die sich in die Nähe oder bis zum Rand des vorderen Substrats (2) erstreckt und ermöglicht, die dritte Elektrode (26) mit einer äußeren Steuervorrichtung (30) zu verbinden, wobei mindestens eine Schutzschicht oder ein Polarisator (34) auf der oberen Fläche (28) des vorderen Substrats (2) befestigt ist und die dritte Elektrode (26) abdeckt, **dadurch gekennzeichnet, dass** die Flüssigkristallanzeigevorrichtung Anschlussstifte (40) umfasst, die am Rand des vorderen Substrats (2) angeordnet sind, wobei einer dieser Anschlussstifte (40) mit der dritten elektrisch leitenden Bahn (32) in elektrischem Kontakt steht, um diese Letztere mit der äußeren Steuervorrichtung (30) zu verbinden, wobei andere Anschlussstifte (40) mit der ersten bzw. der zweiten elektrisch leitenden Bahn (20, 24) in elektrischem Kontakt stehen, was ermöglicht, die erste und die zweite Elektrode (12, 16) mit der äußeren Steuervorrichtung (30) oder mit einer separaten äußeren Steuervorrichtung zu verbinden, wobei die Flüssigkristallanzeigevorrichtung ferner **dadurch gekennzeichnet ist, dass** die zweite Elektrode (16) auf einer oberen Fläche (18) des hinteren Substrats (6) und gegenüber der ersten Elektrode (12) strukturiert ist.

## Claims

1. Liquid crystal display device comprising a front substrate (2) and a back substrate (6) which extend parallel to and at a distance from the front substrate (2), front (2) and back substrates (6) being joined together by means of a sealing frame (8) which delimits a sealed enclosure (10) for the confinement of a liquid crystal, the liquid crystal display device comprising at least a first electrode (12) structured on a lower face (14) of the front substrate (2), and at least a second electrode (16), the optical properties of the liquid crystal being modified by application of an appropriate electric voltage at the cross point of the considered first and second electrode (12, 16), the at least first electrode (12) and the at least second electrode (16) being made of a transparent electric conductor material and being extended towards the exterior of the liquid crystal display device (1) by a first, respectively a second electrically conductive path (20, 24) structured on the lower face (14) of the front substrate (2) and which extend close to an edge of the front substrate (2) or up to this edge, at least a third electrode (26) defining a capacitive touch zone being structured on an upper face (28) of the front substrate (2), said third electrode (26) being made of a transparent electrically conductive material and being extended by a third electrically conductive path (32) which extend close to or up to the edge of the front substrate (2) and which makes it possible to connect the third electrode (26) to an external control device (30), at least a protective layer or a polariser (34) being fixed onto the upper face (28) of the front substrate (2) and covering the third electrode (26), **characterized in that** the liquid crystal display device comprises connecting pins (40) arranged on the edge of the front substrate (2), one of these connecting pins (40) being in electric contact with the third electrically conductive path (32) to connect the latter with the external control device (30), other electrical pins (40) being in electric contact with the first, respectively the second electrically conductive path (20, 24), making it possible to connect the first and the second electrode (12, 16) to the external control device (30) or to a distinct external control device, the liquid crystal display device being also **characterized in that** the second electrode (16) is structured on an upper face (18) of the back substrate (6) and opposed to the first electrode (12).
